# EUROPÄISCHE PATENTANMELDUNG

(11) **EP 2 639 868 A1**
(43) Veröffentlichungstag der Anmeldung: **18.09.2013**
(21) Anmeldenummer: 12159142.4
(22) Anmeldetag: 13.03.2012
(51) Int. Cl.: H01M 8/02, H01M 8/04

(54) **Bipolarplatte sowie elektrochemische Zelle mit einer solchen Bipolarplatte**

(71) Anmelder: Siemens Aktiengesellschaft, 80333 München (DE)
(72) Erfinder: Brandt, Torsten, 91301 Forchheim (DE)

(57) **Zusammenfassung**

Eine Bipolarplatte (2) für eine elektrochemische Zelle (4), umfasst zwei Plattenelemente (10, 12), zwischen denen ein Strömungsraum (4) mit einem Strömungseinlass (6) sowie einem Strömungsauslass (8) angeordnet ist. Der Strömungsraum (4) wird von Kühlmittel (K) durchströmt. Jedes Plattenelement (10, 12) weist eine Kontaktebene (16) sowie eine Vielzahl von ersten, aus der Kontaktebene (16) herausragenden, dem jeweils anderen Plattenelement (10, 12) abgewandten Erhebungen (14) auf. Jede Erhebung (14) weist zur Kontaktebene (16) des Plattenelements (10, 12) eine Öffnung (18) auf, wobei sich die Öffnungen (18) beider Plattenelemente (10, 12) teilweise überlappen, so dass durch die ersten Erhebungen (14) Strömungskanäle (20) verlaufen. Eine besonders gleichmäßige Durchströmung der Bipolarplatte (2) wird erreicht, indem auch zweite Erhebungen (24) vorgesehen sind, die sich bezüglich ihrer Geometrie von den ersten Erhebungen (14) unterscheiden.

## Beschreibung

Die Erfindung betrifft eine Bipolarplatte für elektrochemische Zellen sowie eine elektrochemische Zelle, insbesondere eine Brennstoffzelle, mit einer solchen Bipolarplatte.

Elektrochemische Zellen sind allgemein bekannt und werden unterteilt in galvanische Zellen und Elektrolysezellen. Eine Elektrolysezelle ist eine Vorrichtung, bei der ein elektrischer Strom eine chemische Reaktion erzwingt, wobei zumindest ein Teil von elektrischer Energie in chemische Energie umgewandelt wird. Eine galvanische Zelle ist eine - zur Elektrolysezelle komplementäre - Vorrichtung zur spontanen Umwandlung von chemischer in elektrische Energie. Eine bekannte Vorrichtung einer solchen galvanischen Zelle ist eine Brennstoffzelle, beispielsweise eine PEM-Brennstoffzelle (Proton Exchange Membrane - Brennstoffzelle oder Polymer Elektrolyt Membrane - Brennstoffzelle).

Brennstoffzellen gewinnen immer mehr an Bedeutung in zukunftsweisenden Konzepten für die Energieerzeugung. Insbesondere Niedertemperatur-Brennstoffzellen auf Basis der Polymer-Elektrolyt-Membran-(PEM)-Technologie werden als umweltfreundliche und effiziente Energiewandler für portable, mobile und stationäre Anwendungen diskutiert und finden bereits erste kommerzielle Verwendungen.

Wesentliches Element einer PEM-Einzelzelle ist eine Membranelektrodeneinheit. Diese besteht aus zwei Elektroden (einer Anode und einer Kathode) und einer sich zwischen den beiden Elektroden befindlichen Elektrolytmembran. Zwischen den Elektroden und der Elektrolytmembran befindet sich eine Katalysatorschicht, in der die wichtigen physikalischen und elektrochemischen Vorgänge, wie Adsorption von Wasserstoff und Sauerstoff am Katalysator, Abgabe und Aufnahme von Elektronen und die Bildung von Wasser kathodenseitig durch Kombination von durch die Membran diffundierten Protonen und (reduziertem) Sauerstoff erfolgen.

In einem Brennstoffzellenstapel befinden sich die Elektroden an der der Elektrolytmembran bzw. Katalysatorschicht abgewandten Seite in Kontakt mit jeweils einer sogenannten Bipolarplatte. Dieses Bauteil hat die Aufgabe, die einzelnen Brennstoffzellen (medienseitig) zu trennen, für Stromfluss im Zellstapel zu sorgen und die Reaktionswärme zu entfernen. Um einen effektiven Stromfluss zu gewährleisten, bestehen die Bipolarplatten aus einem elektrisch-leitendem Material, welches einen niedrigen Übergangswiderstand zu den Elektroden aufweisen muss.

Eine Bipolarplatte ist z.B. in der WO 2004/107486 A1 beschrieben. Die Separator- oder Bipolarplatte umfasst zwei profilierte, sich an Kontaktflächen berührende Plattenelemente, zwischen denen ein Fluid- oder Strömungsraum für das Kühlmittel gebildet ist. Die Plattenelemente weisen mehrere symmetrisch auf der Oberfläche der Plattenelemente angeordnete Prägungen nach Art von runden Vertiefungen auf. Die Prägungen beider Plattenelemente sind relativ zueinander versetzt. Charakteristisch für solche Bipolarplatten sind zu relativ niedrige Strömungsgeschwindigkeiten sowie eine nicht immer optimale Verteilung des Kühlmittels im Strömungsraum zwischen den Plattenelementen.

Der Erfindung liegt die Aufgabe zugrunde, eine besonders gleichmäßige Durchströmung einer Bipolarplatte für eine elektrochemische Zelle zu ermöglichen.

Die Aufgabe wird erfindungsgemäß gelöst durch eine Bipolarplatte für eine elektrochemische Zelle, umfassend einen zwischen zwei Plattenelementen angeordneten Strömungsraum mit einem Strömungseinlass sowie einem Strömungsauslass für ein den Strömungsraum durchströmendes Kühlmittel,
- wobei jedes Plattenelement eine Kontaktebene sowie eine Vielzahl von ersten, aus der Kontaktebene herausragenden, dem jeweils anderen Plattenelement abgewandten Erhebungen aufweist,
- wobei jede Erhebung zur Kontaktebene des Plattenelements hin eine Öffnung aufweist,
- wobei sich die Öffnungen beider Plattenelemente teilweise überlappen, so dass durch die ersten Erhebungen (14) Strömungskanäle verlaufen, und
- wobei zweite Erhebungen vorgesehen sind, die sich bezüglich ihrer Geometrie von den ersten Erhebungen unterscheiden.

Die Aufgabe wird weiterhin erfindungsgemäß gelöst durch eine elektrochemische Zelle, insbesondere eine Brennstoffzelle, mit einer derartigen Bipolarplatte. Die in Bezug auf die Bipolarplatte nachstehend aufgeführten Vorteile und bevorzugten Ausgestaltungen lassen sich sinngemäß auf die elektrochemische Zelle übertragen.

Die Erfindung basiert auf der Überlegung, die Strömungsrichtung des Kühlmittels gezielt zu führen, indem durch die Geometrie der ersten und der zweiten Erhebungen der Verlauf der Strömungskanäle zwischen den zwei Plattenelementen modifiziert wird. Insbesondere werden die Strömungskanäle an gewählten Stellen verengt bzw. blockiert, so dass das Kühlmittel zwangsweise um diese Stellen herumströmt und dadurch eine bessere Verteilung des Kühlmittels im gesamten Netz von Strömungskanälen erreicht ist. Unter "Geometrie der Erhebungen" wird hierbei die Größe und/oder die Form der Erhebungen verstanden. Insbesondere stellen die Mehrheit der Erhebungen auf den Plattenelementen erste Erhebungen dar, wie sie standardmäßig bei solchen Plattenelementen im Rahmen von Bipolarplatten für elektrochemische Zellen ausgebildet sind. Erhebungen, die sich im Hinblick auf ihre Größe und/oder Form von den ersten Erhebungen unterscheiden, werden hierbei als zweite Erhebungen bezeichnet.

Durch ein gezieltes Umlenken des Kühlmittels werden insbesondere Bypass-Strömungen erzeugt, so dass Bereiche, die in der Regel nicht so gut erreichbar für das Strömungsmedium sind, ebenfalls ausreichend vom Kühlmittel durchflutet werden. Insbesondere wird dabei die Strömungsgeschwindigkeit des Kühlmittels erhöht. Eine derartige Bipolarplatte zeichnet sich durch einen besseren Gasaustrag bzw. eine homogene Kühlcharakteristik über der gesamten Fläche aus.

Gemäß einer bevorzugten Ausgestaltung sind die zweiten Erhebungen kleiner als die ersten Erhebungen ausgestaltet, so dass die Strömungskanäle im Bereich der zweiten Erhebungen verengt oder unterbrochen sind. Konstruktiv wird eine Verengung bzw. Unterbrechung der Strömungskanäle erreicht, indem die Öffnungen der zweiten Erhebungen, die ebenfalls kleiner sind als die Öffnungen der ersten Erhebungen, nur geringfügig oder gar nicht die Öffnungen der gegenüberliegenden, versetzten Erhebungen des anderen Plattenelements überlappen. Durch die Verengungen und Unterbrechungen einiger der Strömungskanäle wird eine erhöhte Strömungsgeschwindigkeit in den durchströmbaren Strömungskanälen erreicht. Hierdurch wird erreicht, dass das Strömungsmedium mit einer erhöhten Geschwindigkeit durch die sonst schwer erreichbaren Bereiche fließt.

Üblicherweise fließt das Kühlmittel auf dem direkten Weg bzw. entlang einer gedachten Verbindungslinie zwischen dem Strömungseinlass und dem Strömungsauslass und Bereiche, die weiter weg von der Verbindungslinie sind, sind schlechter durchflutet. Die Verbindungslinie ist hierbei als die kürzeste Strecke zwischen dem Strömungseinlass und dem Strömungsauslass der elektrochemischen Zelle definiert und fällt im Wesentlichen mit einer Hauptströmungsrichtung des Kühlmittels zusammen. Vorteilhafterweise sind daher die zweiten Erhebungen in im Bereich der Verbindungslinie zwischen dem Strömungseinlass und dem Strömungsauslass vorgesehen, um das Kühlmittel zu den Bereichen abseits der Hauptströmungsrichtung umzuleiten. Zweckdienlicherweise sind zudem abseits der Verbindungslinie zwischen dem Strömungseinlass und dem Strömungsauslass nur erste Erhebungen vorgesehen, durch welche ein Bypass-Strom erzeugt wird, um Bereiche niedriger Strömungsgeschwindigkeit in den Umlenkbereichen zu vermeiden.

Im Hinblick auf eine effiziente Umverteilung des Strömungsmediums ist mindestens eine Gruppe von zwei oder mehreren räumlich nahen zweiten Erhebungen ausgebildet. Je mehr Erhebungen eine solche Gruppe umfasst, desto größer ist die Wirkung auf die Ausbreitung des Strömungsmediums bzw. Kühlmittels.

Gemäß einer bevorzugten Variante umfasst die mindestens eine Gruppe zwei oder mehrere unmittelbar nebeneinander angeordnete zweite Erhebungen. Gemäß einer alternativen, bevorzugten Variante ist die mindestens eine Gruppe durch eine alternierende Abfolge von ersten und zweiten Erhebungen gebildet, so dass die zweiten Erhebungen nicht direkt nebeneinander positioniert sind, sondern zwischen je zwei zweiten Erhebungen eine erste Erhebung angeordnet ist. Es sind in Bezug auf die Anzahl und die Anordnung der ersten und der zweiten Erhebungen auch weitere Varianten denkbar, die hier jedoch nicht ausführlich diskutiert werden.

Eine besonders gute Kühlcharakteristik wird erreicht, indem das Kühlmittel serpentinenförmig im Strömungsraum zwischen dem Strömungseinlass und dem Strömungsauslass geführt wird. Eine einfachste Form der serpentinenförmigen Führung wird erreicht, indem vorzugsweise mindestens zwei Gruppen von zweiten Erhebungen vorgesehen sind, von denen eine näher an den Strömungseinlass und eine näher an den Strömungsauslass ist. Näher an den Strömungseinlass bedeutet hierbei, dass wenn die Fläche der Plattenelemente durch eine Mittellinie zwischen dem Strömungseinlass und dem Strömungsauslass in zwei gleiche Hälften geteilt wird, diese Gruppe sich vollständig oder wenigstens größtenteils in der dem Strömungseinlass zugeordnete Hälfte befindet. Das gleiche gilt für die andere Gruppe, allerdings bezogen auf den Strömungsauslass.

Im Hinblick auf eine gleichmäßige Strömungsverteilung sind die zweiten Erhebungen vorzugsweise symmetrisch verteilt.

Bevorzugt weist lediglich eines der beiden Plattenelemente der Bipolarplatte zweite Erhebungen auf. Der wesentliche Vorteil hierbei ist, dass das Plattenelement, welches nur die ersten Erhebungen aufweist, ein Standard-Plattenelement sein kann, wie es heutzutage in Brennstoffzellen eingesetzt wird. Da dabei nur eines von zwei Plattenelementen modifiziert ist, sind die Herstellungskosten für eine oben beschriebene Bipolarplatte möglichst niedrig gehalten.

Im Hinblick auf eine technologisch einfache und kostengünstige Herstellung der Erhebungen, die die Möglichkeit zum Modifizieren der Geometrie der Erhebungen bietet, werden die Erhebungen im jeweiligen Plattenelement eingeprägt, so dass sowohl die ersten als auch die zweiten Erhebungen durch Einprägen im Material des Plattenelements gebildet sind.

Zweckdienlicherweise sind die ersten Erhebungen als Noppen mit einem kreisförmigen Querschnitt ausgebildet. Insbesondere weisen dabei je zwei benachbarte Noppen den gleichen Abstand zueinander auf. Nach einer bevorzugten Ausgestaltung sind die zweiten Erhebungen als Noppen mit einem halbkreisförmigen Querschnitt ausgebildet. Die zweiten Erhebungen weisen dabei insbesondere den gleichen Radius wie die ersten Erhebungen auf, aufgrund ihres halbkreisförmigen Querschnitts sind sie jedoch nur halb so groß wie die ersten Erhebungen.

Ein Ausführungsbeispiel wird anhand einer Zeichnung näher erläutert. Hierin zeigen:
- FIG 1: schematisch und stark vereinfacht eine Draufsicht auf eine Bipolarplatte,
- FIG 2: eine Draufsicht auf zwei übereinander positionierte Plattenelemente einer Bipolarplatte gemäß dem Stand der Technik, bei der keine gezielte Strömungsführung erfolgt,
- FIG 3: in einer Seitenansicht einen Schnitt durch die Bipolarplatte gemäß FIG 2, und
- FIG 4: eine Draufsicht auf zwei übereinander positionierte Plattenelemente einer Bipolarplatte mit einer serpentinenförmigen Strömungsführung, und
- FIG 5: in einer Seitenansicht einen Schnitt durch die Bipolarplatte gemäß FIG 4.

Gleiche Bezugszeichen haben in den verschiedenen Figuren die gleiche Bedeutung.

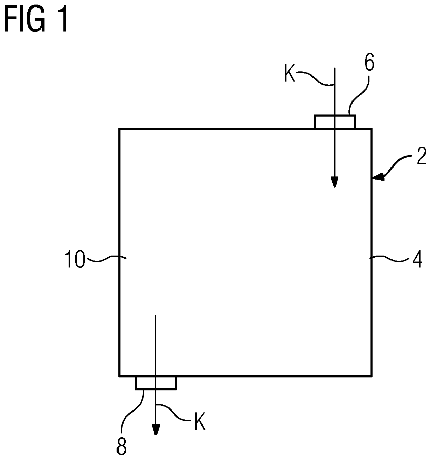

In FIG 1 ist eine Bipolarplatte 2 für eine nicht näher gezeigte Brennstoffzelle in einer schematischen Draufsicht dargestellt. Innerhalb der Bipolarplatte 2 ist ein Strömungsraum 4 für Kühlmittel K, in diesem Fall Kühlwasser, ausgebildet. Durch einen Strömungseinlass 6 wird von Kühlwasser K in den Strömungsraum 4 eingeleitet und durch einen Strömungsauslass 8 hinausgeleitet. Der Strömungsraum 4 ist auf seinen beiden Flachseiten begrenzt durch zwei Plattenelemente, von denen in FIG 1 lediglich ein oberes Plattenelement 10 sichtbar ist. Das Plattenelement 10 ist metallisch. Die Oberfläche des Plattenelements 10 weist zudem eine Profilierung aus, die in FIG 1 nicht näher gezeigt ist.

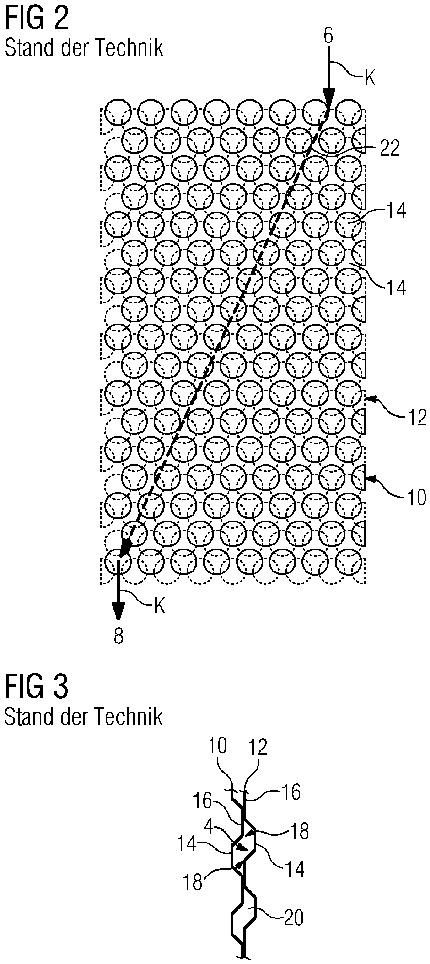

Der Aufbau und die Anordnung der Plattenelemente 10, 12 gemäß dem Stand der Technik ist in FIG 2 und FIG 3 gezeigt. In den Plattenelementen 10, 12 ist eine Vielzahl von noppenförmigen Erhebungen 14, weiterhin auch als erste Erhebungen bezeichnet, eingeprägt. In FIG 2 sind die Erhebungen 14 des oberen Plattenelements 10 mit durchgehender Linie gezeigt, während die Erhebungen 14 des unteren Plattenelements 12 mit gestrichelter Linie gekennzeichnet sind.

Wie aus FIG 3 ersichtlich, sind die Erhebungen 14 eines der Plattenelemente 10, 12 dem jeweils anderen Plattenelement 10, 12 abgewandt. Die Erhebungen gemäß FIG 2 und FIG 3 weisen alle einen kreisförmigen Querschnitt auf und sind gleich groß und symmetrisch angeordnet. Dabei weist jedes der Plattenelemente 10, 12 eine Kontaktebene 16 auf, aus der die Erhebungen 14 nach außen herausragen. Der Kontakt zwischen den beiden Plattenelementen 10, 12 erfolgt in der Kontaktebene 16.

Die im Material der Plattenelemente 10, 12 eingeprägten Erhebungen oder Noppen 14 sind von drei Seiten umschlossen jedoch zur Kontaktebene 16 hin weisen sie eine Öffnung 18 auf. Im zusammengebauten Zustand der Bipolarplatte 2 sind die Noppen 14 zueinander versetzt. Die Öffnungen 18 überlappen sich teilweise, so dass durch die Erhebungen 14 im Strömungsraum 4 eine Vielzahl von diskreten Strömungskanälen 20 für das Kühlwasser K verlaufen.

In FIG 2 ist weiterhin eine Hauptströmungsrichtung 22 gezeigt, welche im Wesentlichen durch die Verbindungslinie zwischen dem Strömungseinlass 6 und dem Strömungsauslass 8, dargestellt ist.

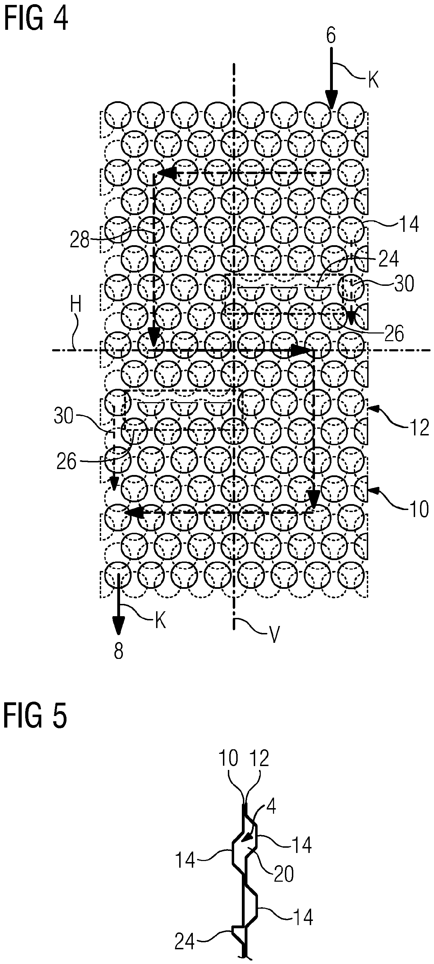

Um eine bessere Verteilung des Kühlwassers K im Strömungsraum 4 zu erreichen, sind einige Erhebungen 24 modifiziert, so dass der Verlauf der Strömungskanäle 20 zwischen den Plattenelementen 10, 12 verändert wird. Dies ist aus FIG 4 ersichtlich. Es sind hierbei zweite Erhebungen 24 vorgesehen, die im gezeigten Ausführungsbeispiel einen halbkreisförmigen Querschnitt aufweisen.

Gemäß dem in den FIG 4 und FIG 5 gezeigten Ausführungsbeispiel weist lediglich das obere Plattenelement 10 die zweiten, halbkreisförmigen Noppen 24 auf, während im unteren Plattenelement 12 lediglich die aus dem Stand der Technik bereits bekannten, kreisförmigen Noppen eingeprägt sind. Aufgrund der veränderten Geometrie der zweiten Noppen 24 überlappen diese nicht mehr die Öffnungen 18 der ersten Noppen 14 der unteren Platte 12 (siehe FIG 5). Dies hat zur Folge, dass an der Stelle der zweiten Noppen 24 das Netz von Strömungskanälen 20 im Strömungsraum 4 unterbrochen ist. Durch die gezielte Anordnung der zweiten Erhebungen 24 kann somit die Kühlwasserströmung zwischen den Plattenelementen 10, 12 umgeleitet werden, um eine homogenere Kühlcharakteristik über der gesamten Fläche der Plattenelemente 10, 12 zu erreichen.

Im Ausführungsbeispiel gemäß FIG 4 sind zwei Gruppen 26 von jeweils drei, unmittelbar nebeneinander angeordneten zweiten Erhebungen 24 vorgesehen. Die zwei Gruppen 26 liegen dabei im Bereich der Hauptströmungsrichtung 22, d.h. sie liegen im Bereich der Verbindungslinie zwischen dem Strömungseinlass 6 und dem Strömungsauslass 8. Die Gruppen 26 sind dabei insbesondere etwa quer zur Hauptströmungsrichtung 22 ausgerichtet, i.d.R. schließt jeder mit dem Bezugszeichen 26 versehene Block einen Winkel zwischen 0° und 90° mit der Hauptströmungsrichtung 22 ein. Eine der Gruppen 26 ist näher an den Strömungseinlass 6, und die andere Gruppe 26 näher an den Strömungsauslass 8 positioniert. Dadurch ergibt sich ein Versatz der beiden Gruppen 26 in Bezug auf eine vertikale Mittellinie V. Außerdem befinden sich die beiden Gruppen 26 auf unterschiedlichen Seiten einer horizontalen Mittellinie H zwischen dem Strömungseinlass 6 und dem Strömungsauslass 8. Die Gruppen 26 sind dabei insbesondere rotationssymmetrisch in Bezug auf einen Schnittpunkt der Mittellinien H und V angeordnet.

Dank der oben beschriebenen und aus FIG 4 ersichtlichen Anordnung der zweiten Noppen 24 ergibt sich eine serpentinenförmige Führung des Kühlwassers zwischen den Plattenelementen 10, 12, die in FIG 4 durch eine gestrichelte Linie 28 angedeutet ist. Es werden somit auch Bereiche des Strömungsraums 4 vom Kühlwasser K intensiv durchflutet, die abseits der Hauptströmungsrichtung 22 liegen, insbesondere die Eckbereiche. Zwischen dem Strömungseinlass 6 und dem Strömungsauslass 8 wird dabei ein größerer Druckabfall erzeugt und der Strömungsraum wird verengt, wodurch die Strömungsgeschwindigkeit des Kühlwassers K erhöht wird. Um Strömungstotzonen zu vermeiden, sind zudem seitlich der Gruppen 26 Bypasskanäle vorgesehen, die in FIG 4 durch die Pfeile 30 gekennzeichnet sind.

Durch die zweiten, modifizierten Noppen 24 wird insbesondere eine optimale Verteilung des Kühlwassers K im Strömungsraum 4 zwischen der Plattenelemente 10, 12 einer Bipolarplatte 2 erreicht. Dies lässt sich auch herstellungstechnisch einfach realisieren, da lediglich eines der beiden Plattenelemente 10, 12 modifiziert wird und zudem Noppen 24 mit verändertem Querschnitt leicht zu herstellen sind.

## Patentansprüche

1. Bipolarplatte (2) für eine elektrochemische Zelle (4), umfassend einen zwischen zwei Plattenelementen (10, 12) angeordneten Strömungsraum (4) mit einem Strömungseinlass (6) sowie einem Strömungsauslass (8) für ein den Strömungsraum (4) durchströmendes Kühlmittel (K),
- wobei jedes Plattenelement (10, 12) eine Kontaktebene (16) sowie eine Vielzahl von ersten, aus der Kontaktebene (16) herausragenden, dem jeweils anderen Plattenelement (10, 12) abgewandten Erhebungen (14) aufweist,
- wobei jede erste Erhebung (14) zur Kontaktebene (16) des Plattenelements (10, 12) hin eine Öffnung (18) aufweist,
- wobei sich die Öffnungen (18) beider Plattenelemente (10, 12) teilweise überlappen, so dass durch die ersten Erhebungen (14) Strömungskanäle (20) verlaufen, und
- wobei zweite Erhebungen (24) vorgesehen sind, die sich bezüglich ihrer Geometrie von den ersten Erhebungen (14) unterscheiden.

2. Bipolarplatte (2) nach Anspruch 1,
wobei die zweiten Erhebungen (24) kleiner als die ersten Erhebungen (24) ausgestaltet sind, so dass die Strömungskanäle (20) im Bereich der zweiten Erhebungen verengt oder unterbrochen sind.

3. Bipolarplatte (2) nach Anspruch 1 oder 2,
wobei die zweiten Erhebungen (24) im Bereich einer Verbindungslinie zwischen dem Strömungseinlass (6) und dem Strömungsauslass (8) vorgesehen sind.

4. Bipolarplatte (2) nach Anspruch 3,
wobei abseits der Verbindungslinie zwischen dem Strömungseinlass (6) und dem Strömungsauslass (8) nur erste Erhebungen (14) vorgesehen sind.

5. Bipolarplatte (2) nach einem der vorhergehenden Ansprüche, wobei mindestens eine Gruppe (26) von zwei oder mehreren räumlich nahen zweiten Erhebungen (24) gebildet ist.

6. Bipolarplatte (2) nach Anspruch 5,
wobei die mindestens eine Gruppe (26) zwei oder mehrere unmittelbar nebeneinander angeordnete zweite Erhebungen (24) umfasst.

7. Bipolarplatte (2) nach Anspruch 5,
wobei die mindestens eine Gruppe (26) durch eine alternierende Abfolge von ersten Erhebungen (14) und zweiten Erhebungen (24) gebildet ist.

8. Bipolarplatte (2) nach einem der Ansprüche 5 bis 7,
wobei mindestens zwei Gruppen (26) von zweiten Erhebungen (24) vorgesehen sind, eine nahe dem Strömungseinlass (6) und eine nahe dem Strömungsauslass (8).

9. Bipolarplatte (2) nach einem der vorhergehenden Ansprüche, wobei die zweiten Erhebungen (24) symmetrisch verteilt sind.

10. Bipolarplatte (2) nach einem der vorhergehenden Ansprüche,
wobei lediglich eines der Plattenelemente (10) zweite Erhebungen (24) aufweist.

11. Bipolarplatte (2) nach einem der vorhergehenden Ansprüche,
wobei die ersten und die zweiten Erhebungen (14, 24) Einprägungen im Material des jeweiligen Plattenelements (10, 12) sind.

12. Bipolarplatte (2) nach einem der vorhergehenden Ansprüche,
wobei die ersten Erhebungen (14) als Noppen mit einem kreisförmigen Querschnitt ausgebildet sind.

13. Bipolarplatte (2) nach einem der vorhergehenden Ansprüche,
wobei die zweiten Erhebungen (24) als Noppen mit einem halbkreisförmigen Querschnitt ausgebildet sind.

14. Elektrochemische Zelle, insbesondere eine Brennstoffzelle (4), umfassend eine oder mehrere Bipolarplatten (2) nach einem der Ansprüche 1 bis 13.
